# EUROPÄISCHE PATENTANMELDUNG

(11) **EP 1 270 274 A2**
(43) Veröffentlichungstag der Anmeldung: **02.01.2003**
(21) Anmeldenummer: 02012145.5
(22) Anmeldetag: 01.06.2002
(51) Int. Cl.: B60C 17/04, B60C 17/06

(54) **Notlaufstützkörper**

(30) Priorität: 26.06.2001 DE 10130291
(71) Anmelder: Continental Aktiengesellschaft, 30165 Hannover (DE)
(72) Erfinder: Glinz, Michael, 31535 Neustadt (DE); Kuhlmann, Silvia, 30659 Hannover (DE); Dieckmann, Andreas, 30163 Hannover (DE)

(57) **Zusammenfassung**

Notlaufstützkörper (1) für ein Fahrzeugrad mit einem auf einer Radfelge befestigten Luftreifen, der als schalenförmiger Ringkörper innerhalb des Luftreifens ausgebildet ist und eine den Reifen im Schadensfall abstützende Notlauffläche aufweist, wobei der schalenförmige Ringkörper sich axial von der Felgenmitte symmetrisch über einen Teilbereich der Felgenbreite erstreckt, eine mit Krümmungen versehene Kontur aufweist und sich mit seinen beiden axial äußeren Wandungsbereichen über ringförmige Stützelemente (24,25) auf der Radfelge abstützt, wobei der schalenförmige Ringkörper als nicht über seinen Umfang geschlossener Ring (Schlitzring) ausgebildet ist und mit einer Einrichtung (Schloss) zum Schließen des Schlitzes versehen ist, die aus zwei sich im Wesentlichen radial einwärts zur Radfelge erstreckenden Flanschen (3,4) und aus mindestens einem die Flansche verbindenden Schlossbügel (5) besteht.

## Beschreibung

Die Erfindung betrifft einen Notlaufstützkörper für ein Fahrzeugrad mit einem auf einer Radfelge befestigten Luftreifen, der im Wesentlichen einen Laufstreifen, zwei Seitenwände, eine Karkasse, Verstärkungselemente, sowie zwei mit Wulstkernen versehene Reifenwülste aufweist, wobei der Notlaufstützkörper als schalenförmiger Ringkörper innerhalb des Luftreifens ausgebildet ist und eine den Reifen im Schadensfall abstützende Notlauffläche aufweist, wobei der schalenförmige Ringkörper sich axial von der Felgenmitte symmetrisch über einen Teilbereich der Felgenbreite erstreckt und im Querschnitt in seinen axial äußeren Bereichen eine mit zur Felge geöffneten ersten Krümmungen versehene Kontur aufweist, und im mittleren Bereich seines Querschnitts zwischen den zur Felge geöffneten Krümmungen eine mit zum Unterbau des Laufstreifens geöffneten zweiten Krümmung versehene Kontur aufweist, wobei die Krümmungen einen oder mehrere stetig ineinander übergehende Krümmungsradien aufweisen, wobei sich der schalenförmiger Ringkörper mit seinen beiden axial äußeren Wandungsbereichen über ringförmige Stützelemente auf der Radfelge abstützt.

Ein einstückig ausgebildeter Notlaufstützkörper bzw. ein mit einem solchen Notlaufstützkörper versehenes Rad ist in der DE-OS 35 07 046 offenbart, wobei der dort gezeigte Notlaufkörper aus einem äußeren metallischen Versteifungsring und einem zwischen Versteifungsring und Felge angeordneten Polsterring besteht.

Bei einer solchen einstückigen Ausbildung ist der Durchmesser des metallischen Verstärkungsringes durch die Erfordernisse der Montage begrenzt. Der Außendurchmesser einens solchen einstückigen Ringes soll zwar möglichst groß sein, um gute Notlaufeigenschaften zu erreichen, jedoch steht diese Forderung in Konflikt mit den Montagegegebenheiten, bei der der metallische Verstärkungsring durch den Kerndurchmesser in den Reifen eingeführt werden muß. Als Kerndurchmesser ist hier der Durchmesser der den Kern beinhaltenden Reifenwülste bezeichnet, der im Wesentlichen dem Felgendurchmesser entspricht.

Darüberhinaus ist die Herstellung eines solchen einstückig ausgebildeten metallischen Versteifungsringes relativ aufwendig und erfolgt in der Regel durch Runddrücken oder Rundwalzen (Rollforming) eines ringförmigen Rohlings, oder aber durch ringförmiges Verschweißen eines Bandmateriales, in jedem Fall aber als zeit- und fertigungsintensive Stückfertigung.

Der Erfindung lag also die Aufgabe zugrunde, einen Notlaufstützkörper bereitzustellen, der auch bei einer optimierten Formgebung über seinen Querschnitt einfach und sicher herzustellen ist, leicht in seiner Endform zu montieren ist und eine problemlose Verbindung mit nötigen Stützelementen oder Polsterringen erlaubt, und der in den Durchmessergrößen hergestellt und in den Reifen montiert werden kann, die für das Abrollen im Notlauf optimal sind und nicht durch den Kerndurchmesser des Reifens beschränkt sind.

Gelöst wird diese Aufgabe durch die Merkmale des Hauptanspuchs. Weitere vorteilhafte Ausbildungen sind durch die Unteransprüche erfasst. Ebenfalls beansprucht ist ein Fahrzeugrad mit einem erfindungsgemäß ausgebildeten Notlaufstützkörper.

Hierbei ist der der schalenförmige Ringkörper zunächst als ein nicht über seinen Umfang geschlossener Ring (Schlitzring) ausgebildet. Durch eine solche Ausbildung kann ein mit optimierter Kontur und mit einem für das Abrollverhalten im Notlauf optimierten größtmöglichen Durchmesser versehener Ringkörper problemlos in den Reifen eingebracht / montiert werden. Durch die Schlitzung des Ringkörpers wird es nämlich ermöglicht, den noch nicht geschlossenen Ringkörpers mit einer schraubenförmigen Montagebewegung in den Reifen einzubringen, ohne durch den Kerndurchmesser behindert zu sein. Das Schließen des Ringkörpers erfolgt dann erst nach Einbringen in den Reifen.

Vorteilhafterweise kann der Ringkörper durch eine solche Ausbildung auch in einem kontinuierlichen Walzverfahren, beispielsweise über eine mit entsprechend komplementär ausgebildeten Walzen versehene 3-Rollen-Biegemaschine in Form einer endlosen Schraube aus einem Bandmaterial hergestellt werden. Diese Endlosschraube wird dann entsprechend dem nötigen Felgen- und Reifenumfang geschnitten, wodurch sich einzelne geschlitzte Ringe mit dem erforderlichen Durchmesser und der gewünschten Querschnittskontur ergeben.

Der schalenförmige Ringkörper wird sodann mit einer Einrichtung (Schloss) zum Schließen des Schlitzes versehen, die u.a. aus zwei an den jeweils gegenüberliegenden und den den Schlitz bildendem Enden des schalenförmigen Ringkörpers angeordeneten und sich im Wesentlichen radial einwärts zur Radfelge erstreckenden Flanschen besteht.

Vorteilhafterweise besitzen die Flansche an die Kontur des Ringkörpers angepasste Fußkörper /Fußbereiche, über die die Flansche mit dem Ringkörper verbunden sind, beispielsweise durch eine mehrfache Punktschweißung oder durch eine Nahtschweißung. Ebenso können die Flansche mit Stützblechen versehen werden, die den Schlossbügel zusätzlich gegen Aufbiegen unter Belastung sichern.

Weiterhin weist der schalenförmige Ringkörper mindestens einen die Flansche verbindenden Schlossbügel auf. Vorteilhafterweise ist der Schlossbügel als eine im Wesentlichen U-förmige Klammer ausgebildet, deren Schenkel im montierten Zustand in Bezug auf die Radfelge radial auswärts sich erstrecken und die Flansche an ihren dem Schlitz abgewandten Seitenflächen umgreifen. Durch eine solche Ausbildung weist der schalenförmige Ringkörper auch im Schlitz- bzw. Verbindungsbereich eine Stabilität auf, die ohne Weiteres geeignet ist, die beim Notlauf auftretenden hohen Belastungen aufzufangen.

In einer vorteilhaften Ausbildung weist das Schloss Sicherungs- und / oder Verbindungsmittel zwischen Flansch und Schlossbügel auf, vorzugsweise ausgebildet als Flansche und Klammer verbindende Bolzen. Solche Bolzen können unterschiedlich ausgebildet und befestigt sein, beispielsweise mit der Klammer und / oder den Flanschen verschweißt oder durch Sprengringe in ihrem Sitz gesichert werden. Vorteilhaft zur Sicherung der Bolzen haben sich auch Federklammern gezeigt, die in eine entsprechende Umfangsnut der Bolzen einrasten. Bei der Verwendung solcher Federklammern läßt sich der Notlaufstützkörper leicht montieren und demontieren.

In einer weiteren und besonders vorteilhaften Ausbildung weist der als nicht über seinen Umfang geschlossene Ring ausgebildete schalenförmige Ringkörper (Schlitzring) einen Schlitz auf, der zur Achse des schalenförmigen Ringkörpern, und damit auch zur Radachse, einen Winkel von bis zu 50° bildet. Durch eine solche Ausbildung werden die beispielsweise bei Kurvenfahrten im Notlauf auf den Ringkörper einwirkenden hohen Querkräfte im Bereich der Schlitzkanten sicher übertragen, ohne überhöhte Spannungsspitzen für die einzelnen Bauteile zu erzeugen.

Insbesondere wird durch eine solche Winkelanordnung des Schlitzes ein Steifigkeitssprung in der Konstruktion des Notlaufstützkörpers unter Belastung im Notlauf / Pannenlauf deutlich verringert.

Anhand eines Ausführungsbeispiels soll die Erfindung näher erläutert werden. Es zeigen:
- Fig. 1: einen Auschnitt eines schalenförmigen Ringkörpers im Bereich des Schlitzes mit zugehörigen Flansch- und Schlossteilen, fertigmontiert und in perspektivischer Ansicht, wobei der Schlitz in einem Winkel von 30° zur Radachse geneigt ist,
- Fig. 2: eine weitere Einrichtung (Schloss) zum Schließen des Schlitzes im fertig montierten Zustand, die für einen Schlitzwinkel von 9° ausgelegt ist,
- Fig. 3: einen Notlaufstützkörper mit einem einen um 9° geneigten Schlitz aufweisenden schalenförmigen Ringkörper,
- Fig. 4: einen Teilquerschnitt eines Rades mit der Radfelge, Reifen und eingebautem Notlaufstützkörper

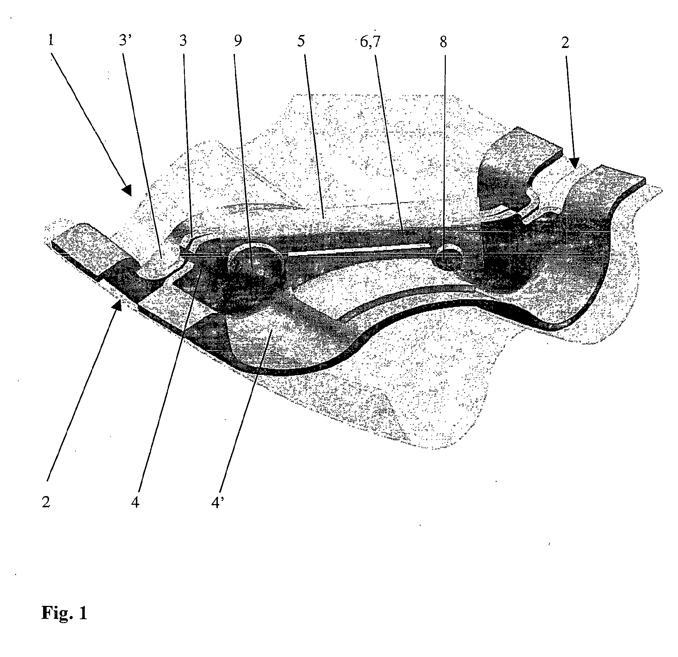

In der der Fig. 1 erkennt man den als schalenförmigen Ringkörper ausgebildeten Notlaufstützkörper 1, der als Schlitzring ausgebildet ist und einen Schlitz 2 aufweist, der zur Achse des schalenförmigen Ringkörpern, und damit auch zur Radachse, einen Winkel von 30° bildet.

An den jeweils gegenüberliegenden und den den Schlitz 2 bildendem Enden des schalenförmigen Ringkörpers 1 sind die Flansche 3 und 4 angeschweißt, die sich im Wesentlichen radial einwärts zur in dieser Ansicht nicht dargestellten Radfelge erstrecken.

Die Flansche 3 und 4 gehen über in an die Kontur des Ringkörpers angepasste Fußkörper /Fußbereiche 3' und 4', über die die Flansche mit dem Ringkörper verbunden sind, hier durch eine nicht näher dargestellte Nahtschweißung.

Die Flansche 3 und 4 sind verbunden durch einen Schlossbügel 5 auf. Der Schlossbügel ist als eine im Wesentlichen U-förmige Klammer ausgebildet, deren Schenkel 6 und 7 im montierten Zustand in Bezug auf die Radfelge radial auswärts sich erstrecken und die Flansche 3 und 4 an ihren dem Schlitz abgewandten Seitenflächen umgreifen.

Das Schloss wird komplettiert durch als Bolzen 8 und 9 ausgebildete Sicherungs- und Verbindungsmittel zwischen Flanschen 3 und 4 und Schlossbügel 5. Die Bolzen des Ausführungsbeispieles sind mit der Klammer und den Flanschen durch mehrere Punktschweißungen verbunden.

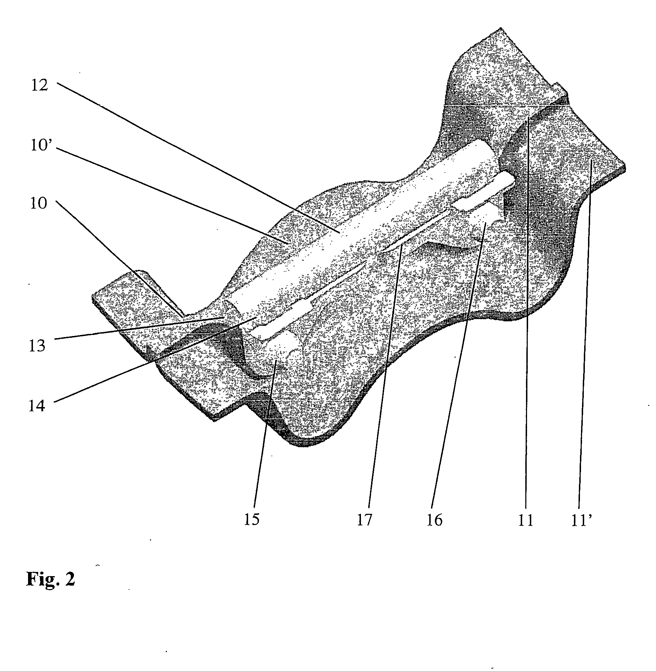

Die Fig. 2 zeigt eine weitere Ausbildung einer Einrichtung (Schloss) zum Schließen des Schlitzes im fertig montierten Zustand, die sich von der in der Fig. 1 gezeigten im Wesentlichen dadurch unterscheidet, dass sie für Ausführungesbeispiel des schalenförmigen Ringkörpers mit einem Schlitzwinkel von 9° ausgelegt ist und die Bolzen anders gesichert sind.

Auch hier erkennt man die an den jeweils gegenüberliegenden und den Schlitz bildendem Enden des hier nicht näher dargestellten schalenförmigen Ringkörpers angeschweißten Flansche 10 und 11, die sich im Wesentlichen radial einwärts zur in dieser Ansicht ebenfalls nicht dargestellten Radfelge erstrecken.

Die Flansche 10 und 11 gehen wiederum über in an die Kontur des Ringkörpers angepasste Fußkörper / Fußbereiche 10' und 11', über die die Flansche mit dem Ringkörper verbunden sind, hier durch eine nicht näher dargestellte Nahtschweißung.

Die Flansche 10 und 11 sind verbunden durch einen Schlossbügel 12 auf. Der Schlossbügel ist auch hier als eine im Wesentlichen U-förmige Klammer ausgebildet, deren Schenkel 13 und 14 im montierten Zustand in Bezug auf die Radfelge radial auswärts sich erstrecken und die Flansche 10 und 11 an ihren dem Schlitz abgewandten Seitenflächen umgreifen.

Dieses Schloss wird komplettiert durch als Bolzen 15 und 16 ausgebildete Sicherungs- und Verbindungsmittel zwischen Flanschen 10 und 11 und Schlossbügel 12. Die Bolzen dieses Ausführungsbeispieles sind mit einer Federklammer 17 gesichert und verbinden so die Flanschen und den Schlossbügel.

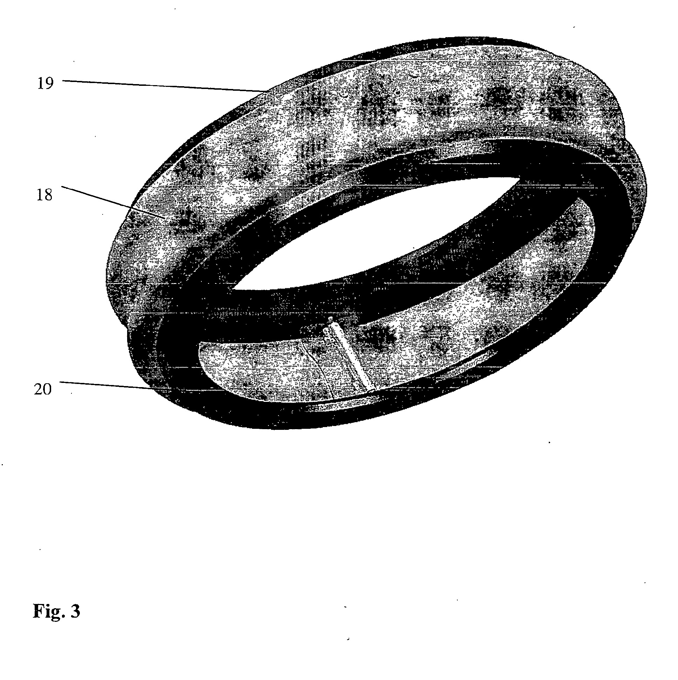

Fig. 3 zeigt einen Notlaufstützkörper mit einem einen um 9° geneigten Schlitz aufweisenden schalenförmigen Ringkörper 18, der sich mit seinen beiden axial äußeren Wandungsbereichen über anvulkanisierte ringförmige Stützelemente 19 und 20 aus Gummi auf der hier nicht näher dargestellten Radfelge abstützt.

Im unteren Bereich des Notlaufstützkörpers befindet hier sich das in der Fig. 2 dargestellte Schloss.

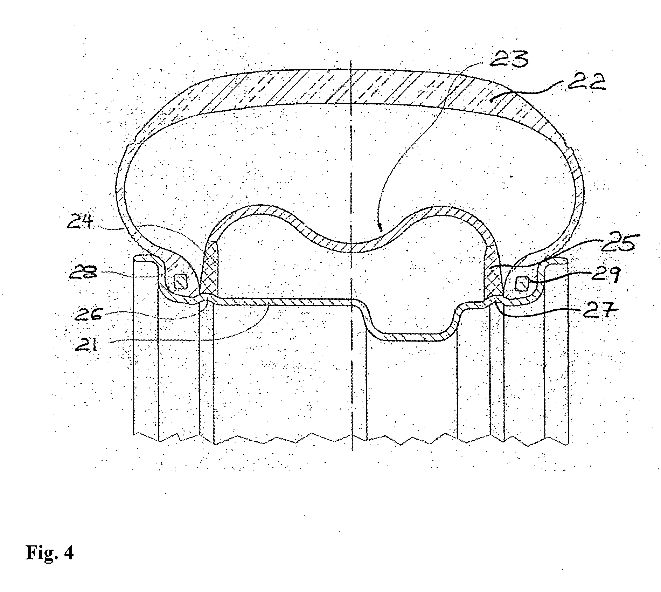

Fig.4 zeigt noch einen Teilquerschnitt eines Rades mit der Radfelge 21, dem Reifen 22 und dem eingebautem Notlaufstützkörper 23, der sich in diesem Einbaubeispiel noch mit einer weiteren Ausführung von ringförmigen Stützelementen 24 und 25 auf der Radfelge 21 jeweils im Bereich des Felgenhumps 26 und 27 abstützt. Die ringförmigen Stützelementen 24 und 25 liegen dabei am jeweiligen Reifenwulst 28 und 29 an.

## Patentansprüche

1. Notlaufstützkörper für ein Fahrzeugrad mit einem auf einer Radfelge befestigten Luftreifen, der im Wesentlichen einen Laufstreifen, zwei Seitenwände, eine Karkasse, Verstärkungselemente, sowie zwei mit Wulstkernen versehene Reifenwülste aufweist, wobei der Notlaufstützkörper als schalenförmiger Ringkörper innerhalb des Luftreifens ausgebildet ist und eine den Reifen im Schadensfall abstützende Notlauffläche aufweist, wobei der schalenförmige Ringkörper sich axial von der Felgenmitte symmetrisch über einen Teilbereich der Felgenbreite erstreckt und im Querschnitt in seinen axial äußeren Bereichen eine mit zur Felge geöffneten ersten Krümmungen versehene Kontur aufweist, und im mittleren Bereich seines Querschnitts zwischen den zur Felge geöffneten Krümmungen eine mit zum Unterbau des Laufstreifens geöffneten zweiten Krümmung versehene Kontur aufweist, wobei die Krümmungen einen oder mehrere stetig ineinander übergehende Krümmungsradien aufweisen, wobei sich der schalenförmiger Ringkörper mit seinen beiden axial äußeren Wandungsbereichen über ringförmige Stützelemente auf der Radfelge abstützt,
**dadurch gekennzeichnet**,
der schalenförmige Ringkörper (1) als nicht über seinen Umfang geschlossener Ring (Schlitzring) ausgebildet ist und mit einer Einrichtung (Schloss) zum Schließen des Schlitzes (2) versehen ist, die aus zwei an den jeweils gegenüberliegenden und den Schlitz bildendem Enden des schalenförmigen Ringkörpers angeordeneten und sich im Wesentlichen radial einwärts zur Radfelge erstreckenden Flanschen (3, 4) und aus mindestens einem die Flansche verbindenden Schlossbügel (5) besteht.

2. Notlaufstützkörper nach Anspruch 1, **dadurch gekennzeichnet, dass** der Schlossbügel (5) als eine im Wesentlichen U-förmige Klammer ausgebildet ist, deren Schenkel (6, 7) im montierten Zustand in Bezug auf die Radfelge radial auswärts sich erstrecken und die Flansche (3, 4) an ihren dem Schlitz abgewandten Seitenflächen umgreifen.

3. Notlaufstützkörper nach Anspruch 1 oder 2, **dadurch gekennzeichnet, dass** das Schloss Sicherungs- und / oder Verbindungsmitteln (8, 9) zwischen Flansch und Schlossbügel aufweist, vorzugsweise ausgebildet als die Flansche und die Klammer verbindende Bolzen.

4. Notlaufstützkörper nach Anspruch 1 bis 3, **dadurch gekennzeichnet, dass** der als nicht über seinen Umfang geschlossener Ring ausgebildete schalenförmige Ringkörper (Schlitzring) einen Schlitz aufweist, der zur Achse des schalenförmigen Ringkörpern einen Winkel von bis zu 50° bildet.

5. Fahrzeugrad mit einem auf einer Radfelge befestigten Luftreifen, der im Wesentlichen einen Laufstreifen, zwei Seitenwände, eine Karkasse, Verstärkungselemente, sowie zwei mit Wulstkernen versehene Reifenwülste aufweist, mit einem Notlaufstützkörper nach einem oder mehreren der Ansprüche 1 bis 4.
